# EUROPEAN PATENT SPECIFICATION

(11) **EP 0 444 925 B1**
(45) Date of publication and mention of the grant of the patent: **05.02.1997**
(21) Application number: 91301634.1
(22) Date of filing: 28.02.1991
(51) Int. Cl.: H04N 5/44

(54) **Picture stabilising circuit**
Bildstabilisierungsschaltung
Circuit de stabilisation d'image

(30) Priority: 28.02.1990 KR 237390
(43) Date of publication of application: 04.09.1991
(73) Proprietor: GOLDSTAR CO. LTD., Seoul (KR)
(72) Inventor: Park, Je-Mun, Suwon-shi, Kyounggi-do (KR)
(74) Representative: Billington, Lawrence Emlyn

(56) References cited:
- EP-A- 0 241 704
- US-A- 4 271 427

## Description

The present invention relates to a picture regeneration stabilising circuit, and particularly to the operation of such a circuit during a non-signal input (non-inputting) or blanking period in order to stabilise the colours of the picture by preventing discrimination errors caused by gating noise when discriminating the broadcasting method during tape regeneration (playback).

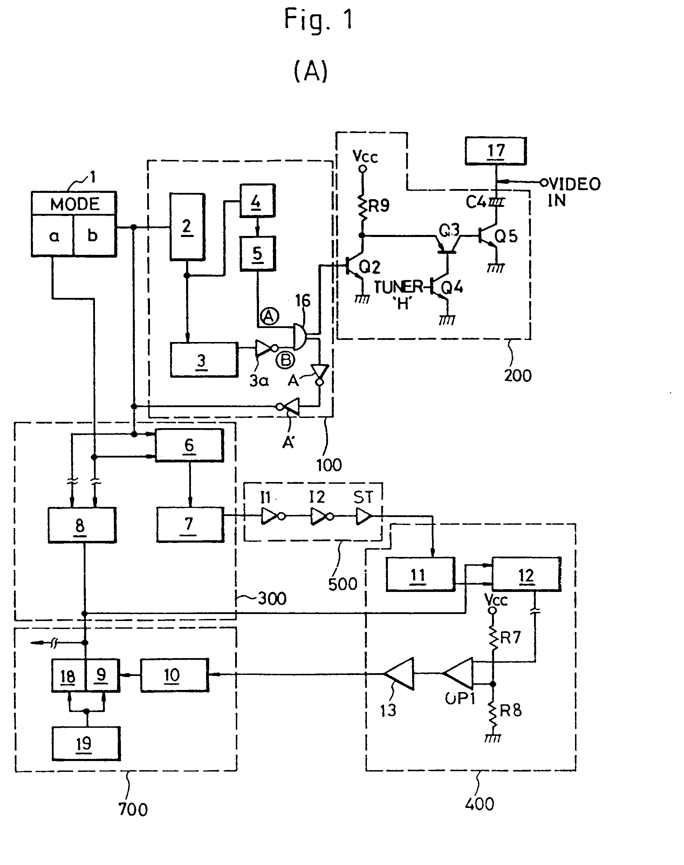

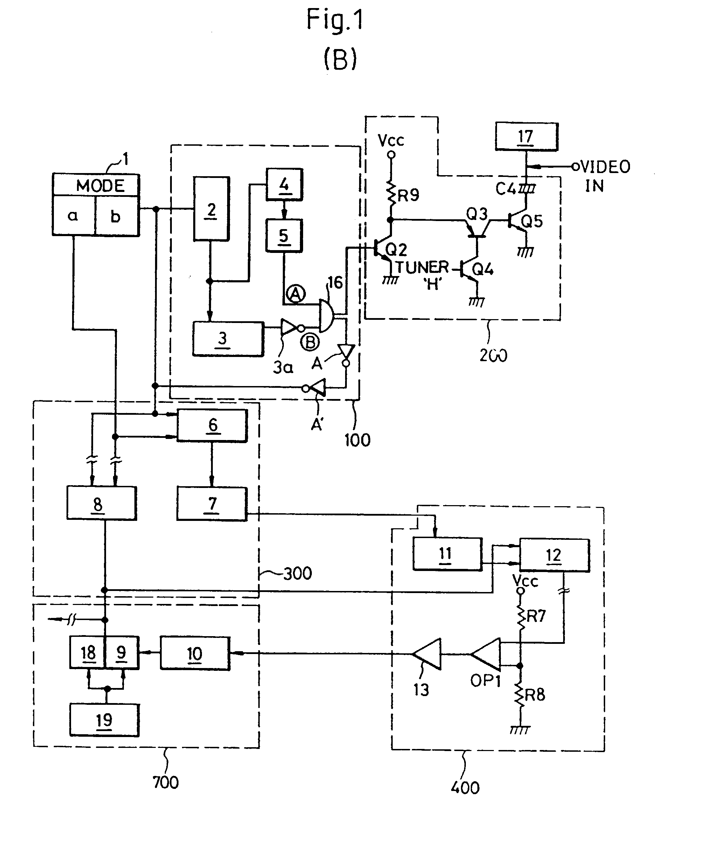

In one possible arrangement, as shown in Figure 1(A), tuner video signals b, which are selected through a switching section 1 in order to switch the tuner line video input, are supplied to a low pass filter 2. This low pass filter 2 is a component of a tuner synchronizing separation section 100 which includes the low pass filter 2, a synchronizing isolator 3, a horizontal automatic frequency control section 4, a horizontal oscillator 5, inverters 3A, A, A', and an AND gate 16.

The signals which are filtered through the low pass filter 2 are simultaneously supplied to both the synchronizing isolator 3 and the horizontal automatic frequency control section 4. The output of the horizontal automatic frequency control section 4 is supplied to the horizontal oscillator 5 in order to control the horizontal synchronizing signal generation, and the horizontal synchronizing signals which are generated through the horizontal oscillator 5 are supplied to an input terminal of the AND gate 16.

The synchronizing signals which are isolated through the synchronizing isolator 3 are supplied to another input terminal of the AND gate 16 where the signals of the horizontal oscillator 5 are supplied through the other input terminal.

The output of the AND gate 16 is supplied to the base of a transistor Q2 of a modulator video input muter (suppression) circuit 200 which includes transistors Q2-Q5, and which is for preventing tuner/line interference. The output of the AND gate 16 is supplied through the inverter A to the input terminal of the inverter A′, and the output of the inverter A′ is supplied to both a chroma drive 8 and a low pass filter 6 of a Y/C (brightness/colour) separation section 300.

The section 300 includes the low pass filter 6, the chroma drive 8 and a synchronizing isolator 7, and is connected to the tuner video b.

The output of the low pass filter 6, which removes the colour components of the video signals inputted to the Y/C separation section 300, is supplied through the synchronizing isolator 7 to a delay section 500, the synchronizing separation section 7 being for extracting B.G.P. (burst gate pulse), and the delay section 500 consists of inverters I1 and I2 and a schmidt trigger ST.

The output of a discriminating section 400 which includes a B.G.P. delaying detecting section 11, a burst gate 12, an OP amplifier OP1 and a buffer 13 is supplied to the PAL/MESECAM detection section 10.

Further, the output of the delay section 500 is also supplied to the input terminal of the B.G.P. delaying detecting section 11, while the output of the B.G.P. delaying detecting section 11 is supplied to the burst gate 12.

The output signals of the chroma drive section 8, which is for extracting the colour signals from the synchronizing signals supplied to the Y/C separation section 300, are supplied to the burst gate 12. The output of the burst gate 12 is supplied to the OP amplifier OP1 which carries out a comparison with the reference voltage as determined by resistances R7,R8.

The output of the OP amplifier OP1 is supplied through the buffer 13 to a PAL/MESECAM detecting section 10 of a broadcasting method discriminating section 700 which includes a phase detecting section 18, a recognition signal (ID) detecting section 9 and a colour killer 19 in addition to the PAL/MESECAM detecting section 10.

The output of the PAL/MESECAM detecting section 10 is supplied to both the recognition (ID) signal detecting section 9 and the phase detecting section 18. The recognition signal and phase detecting sections 9, 18 are connected to the colour killer 19, and the line video output 'a' which is selected by the switching device 1 is also supplied to both the low pass filter 6 and the chroma drive section 8 of the Y/C separation section 300.

The modulator video input muter circuit 200 receives through its base the output of the AND gate 16 of the tuner synchronizing separation section 100, and the emitter of the transistor Q2 of the section 200 is grounded. The collector of the transistor Q2 is connected to both the emitter of the transistor Q3 and the resistance R9 where the power source Vcc is supplied.

The base of the transistor Q3 is connected to the collector of the transistor Q4 which is grounded through its emitter and receives through its base the tuner high signals from a microcomputer. The collector of the transistor Q3 is connected to the base of the transistor Q5 which is grounded through its emitter. The collector of the transistor Q5 is connected through a capacitor C4 to a video input terminal IN, and also connected ultimately to a modulator 17.

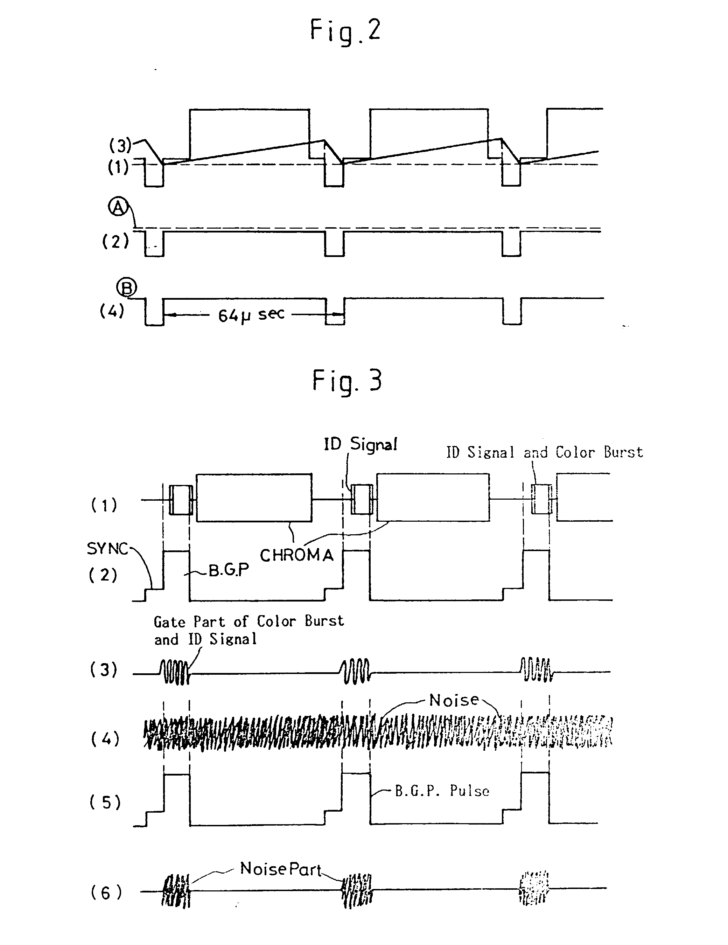

The circuit constituted as above will now be described as to its operation referring to the timing charts of Figures 2 and 3.

First, under the condition that the mode switching device 1 of Figure 1 is selected, if a tuner video signal b is supplied to the tuner synchronizing separation section 100, the colour or chroma signals C are removed by the low pass filter 2, and only the signals (the wave pattern 1 of Figure 2) of the pure brightness or luminance component Y are supplied to both the synchronizing isolator 3 and the horizontal automatic frequency control section 4.

Consequently, the synchronizing signals are isolated by the synchronizing isolator 3, and the isolated signals pass through the inverter 3a with the result that the signals take the wave pattern 4 of Figure 2, and that they are supplied to one of the input terminals B of the AND gate 16.

Further, a saw tooth wave (wave pattern 3 of Figure 2) is generated by the frequency (15·62 KHz) of the horizontal automatic frequency control section 4, and therefore, the horizontal synchronizing signals generated from the horizontal synchronizing oscillator 5 are continuously triggered in such a manner that they exactly correspond to 64 microseconds. Then these signals are supplied to the other input terminal A of the AND gate 16 in the form of the wave pattern 2 of Figure 2.

The AND gate 16 compares the two inputs A,B, and if the two inputs A,B are in a high state (that is, if it is the normal state in which video signals are received under the actual tuner mode), a high state output is produced and supplied to the base of the transistor Q2, so that transistor Q2 is turned on. Consequently, the potential of the collector of the transistor Q2 goes low and this low state is supplied to the emitter of the transistor Q3.

The transistor Q4 which receives a high signal from the micom is turned on in its collector and emitter so as for the collector of the transistor Q4 to have a low state before being supplied to the base of the power source driven transistor Q3.

However, the transistor Q3 is turned off because of the low state of the emitter, and therefore, a low potential is supplied to the base of the transistor Q5 which is used in muting the inputted video signals of the final modulator 17.

Consequently, the transistor Q5 is also turned off, so that video signals should be output through the modulator 17 in a normal manner. Further, the high output of the AND gate 16 sequentially passes through the inverters A,A′, and therefore, muting is not carried out for the input video signals of the Y/C isolating section 300, with the result that the video signals are inputted into the Y/C isolating section 300 in a normal manner.

Consequently, only pure brightness signals Y having the wave pattern 1 of Figure 2 are extracted by the low pass filter 6, and then the extracted signals are supplied to the synchronizing isolator 7 where the signals are synchronized-isolated (BGP). The synchronizing signals (B.G.P) which are isolated by the synchronizing isolator 7 are sufficiently delayed by the synchronizing delaying section 500, and then the signals are supplied to the B.G.P. delay detecting section 11 of the discriminating section 400 in the form of the wave pattern 2 of Figure 3. Then, a colour signal C having the form of the wave pattern 1 of Figure 3 is supplied to the burst gate 12 of the discriminating section 400 by the chroma drive 8 of the Y/C isolating section 300, and consequently, colour burst and recognition signal gate portions are detected in the form of the wave pattern 3 of Figure 3 in the burst gate 12 by the BGP signals which are output from the BGP delaying detecting section 11 (PAL signals do not have frequency deviations, but MESECAM signals do).

Then, after going through the general procedures, (i.e. F-V conversion; in the case of PAL mode, there is no frequency deviation and no voltage difference, while, in the case of MESECAM mode, there are frequency deviations along with voltage differences), the signals are supplied to the OP amplifier OP1 where the signals are compared with the reference voltages of the supply resistances R7,R8.

In the case of PAL, there is no voltage difference, and therefore, a low output OV is output, while, in the case of MESECAM, there are voltage differences, and therefore, high signals (4-5V) are output.

Then the signals are supplied through the output buffer 13 of the OP amplifier OP1 to the PAL/MESECAM detecting section 10 of a broadcasting method discriminating section 700, and the PAL/MESECAM detecting section 10 is controlled by the output of the OP amplifier OP1 which is output through the buffer 13 (the output being low in the case of PAL, and the output being high in the case of MESECAM). The signals are detected by the phase detecting section 18 in the case of PAL signals, and by the recognition signal detecting section 9 in the case of MESECAM signals. Then, the requirement for colour killing is decided in the conventional manner by the colour killer 19, and the colour signals are output after undergoing conventional processes and after being Y/C-mixed. The synchronising signals of the synchronising isolator 3 of the Y/C isolating section 300 may include just the synchronising signals or, alternatively, both the synchronising signals and the BGP signals (refer to the wave pattern 2 of Figure 3), depending on the type of IC. Here, the description is given based on the assumption that both the synchronising signals and the BGP signals are simultaneously obtained.

If the two inputs A,B of the AND gate 16 are different from each other (in the form of high, low or low, high), or if both of the inputs are low, the output of the AND gate 16 is shifted to a low state, with the result that the transistor Q2 of the muting circuit 200 is turned off, and that the transistors Q3, Q4,Q5 are turned on.

Consequently, the input video signals of the modulator 17 are muted, and the output of the AND gate 16 is shifted to a low state after passing through the inverters A,A′, with the result that the video signals which are supplied to the Y/C isolating section 300 are also muted.

In the case where a line video 'a' is formed by the mode switching device 1, the line video is also subjected to the extraction of the brightness signals Y by the low pass filter 6 as in the case of the tuner video input.

Then synchronising (B.G.P) isolation is carried out by the synchronising isolator 7, and then a delay is introduced by the delay section 500 before being supplied to the discriminating section 400.

Meanwhile, the line video colour signals are supplied to the discriminating section 400 by the chroma driver section 8 after going through the general processes, and the discriminating section 400 is operated in the same manner as when processing the tuner video signals. Thus the output of the section 400 is supplied to the Y/C isolating section 300 which outputs it in the form of video signals.

The B.G.P signals will be described as a supplemental matter. That is, the B.G.P signals are needed for the following reason.

If a signal having the form of the wave pattern 1 of Figure 3 is input, then colour burst (PAL method) and recognition (ID) pulse (SECAM & MESECAM) will appear, and then a colour signal (chroma signal) having the form of the wave pattern 1 of Figure 3 is input. However, it is difficult to control all the colour signals, and therefore, the B.G.P signals are used in order to gate only the colour burst and recognition (ID) pulses and to discriminate between them.

However, when a VCR is used (regenerated) without tuner or line video signals, if the B.G.P signals are supplied to the discriminating section 400 slightly in advance owing to the nature of the processing of the chroma signals, then the noise component of the wave pattern 4 of Figure 3 is gated to produce the wave pattern 6 owing to the wave pattern 5 (the wave pattern caused by the B.G.P delaying detecting section 11).

Consequently, the discriminating section 400 carries out discriminating errors, and therefore, the colour killer 19 has to be operated until the B.G.P and colour signals are normally operated, or delay or distortion of colours will appear.

That is, according to the circuit described above, if a synchronising signal is output in order to prevent interference to the tuner line under the tuner mode, there is present only a tuner circuit for preventing mode (line/tuner) interference and for carrying out video suppression. Therefore, in the case where a VCR is used during a non-signal or blanking period (without tuner/line video), the time period for processing the colour signals and supplying them to the discriminating section is longer than the time period for separating the synchronising signals (B.G.P.) and supplying them to the discriminating section to carry out gatings. Therefore, during tape loading, high pass noises are transferred from the chroma drive section 8 to the detecting terminal with the result that they are input earlier than the colour signals. This results in the noise being erroneously recognised as a colour signal by the B.G.P. signal (performing the gating), thereby causing discrimination errors, and ultimately delaying the colour signals, and suppressing the colours.

To repeat, if there is no received synchronising signal, a synchronising signal (or a high signal) is output from the internal circuit in order to carry out video suppression through the inverters A,A'. However, when noise is produced which is similar in form to a synchronising signal, it is mistaken for a video signal, and therefore, in spite of the fact that there is no video signal, suppression cannot be perfectly carried out, with the result that the picture on the screen is distorted and so on.

According to the invention there is provided a picture stabilising circuit for stabilising a picture signal particularly during non-signal input, comprising: a tuner synchronising separation section for receiving tuner video signals and for supplying an output signal indicating whether tuner video signals are being received; a video suppression circuit to be controlled by the output of the tuner synchronising separation section and for preventing tuner/line interferences; a Y/C separation section for receiving tuner/line video signals and carrying out Y/C separation; a discriminating section for receiving synchronising signals and the chroma signals separated by the Y/C separation section, detecting colour burst signals and recognition signals and comparing detected signals with a reference voltage to produce an output; and a broadcasting method discriminating section for discriminating and selecting the broadcasting method based on the output of the discriminating section,
wherein the stabilising circuit further comprises: a further suppression circuit for muting the chroma signals and the synchronising signals supplied to the discriminating section during non-signal input.

The present invention is intended to overcome the above described disadvantages of the conventional circuit by the provision of a picture regeneration stabilising circuit with dual suppression circuits.

Preferably the further suppression circuit is controlled by the output of a synchronising signal isolator of the Y/C separation section, and the Y/C separation section is adapted to output synchronising signals (B.G.P.) in the presence of a line/tuner video signal input, and to output a high voltage in the absence of such input signals.

In this way the noise which would otherwise be input to the discriminating section from the Y/C separation section is suppressed.

The above object and other advantages of the present invention will become more apparent by describing in detail a preferred embodiment of the present invention with reference to the attached drawings in which:
Figure 1(A) is a circuit diagram of a conventional picture regeneration stabilising circuit;
Figure 1(B) is a variant thereof without a delay section;
Figure 2 is a timing chart for the tuner synchronising separation section of Figure 1;
Figure 3 is a timing chart for the Y/C separation section of Figure 1;

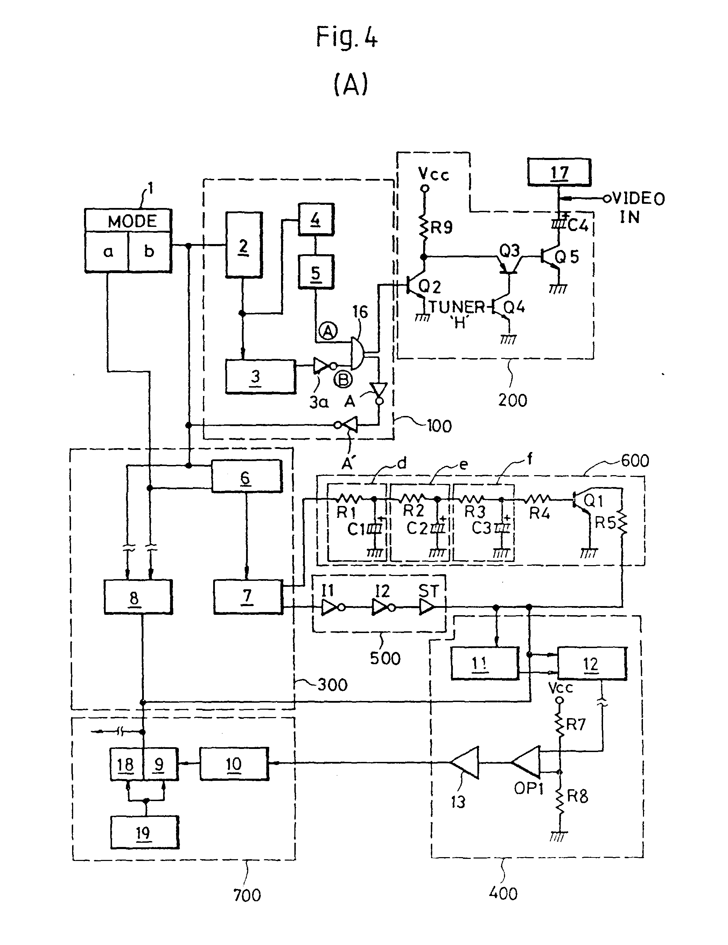

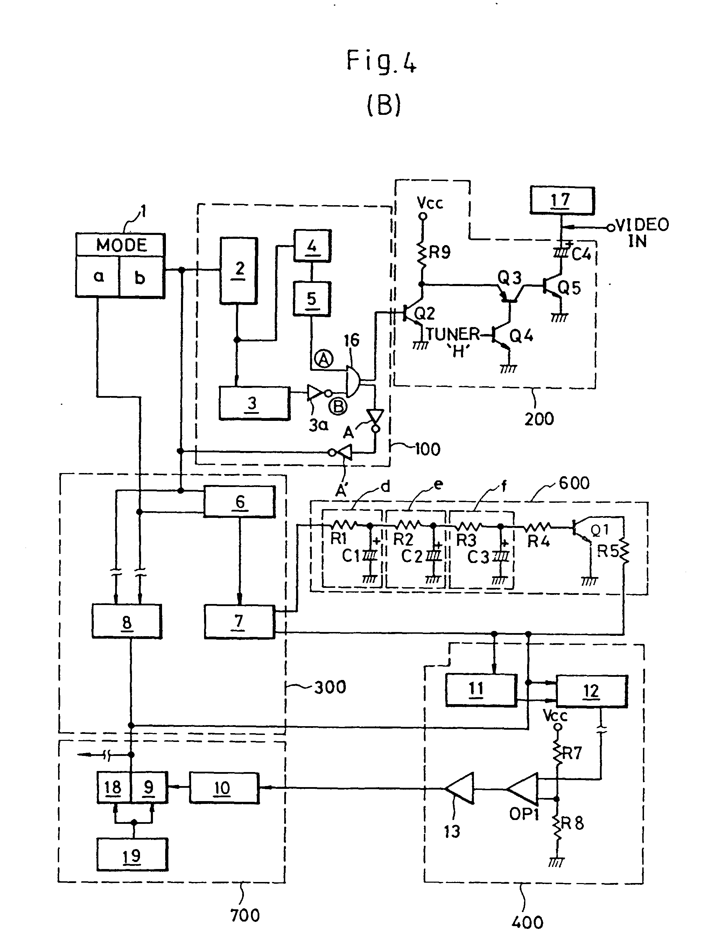

Figure 4(A) is a circuit diagram of the picture regeneration stabilising circuit according to an embodiment of the present invention;
Figure 4(B) is a variant thereof without a delay section; and
Figure 5 is a timing chart for the circuit of Figure 4.

The present invention provides an improvement of the conventional circuit in a manner described below. That is, the synchronising signals (B.G.P.) output from the synchronising isolator 7 of the Y/C separation section 300 are supplied through integrating and dc flattening circuits d,e,f (respectively consisting of a resistance and a capacitor) and through a resistance R4 to the transistor Q1. The emitter of the transistor Q1 is grounded, and the collector of the transistor Q1 is connected through a resistance R5 to the delay section 500, and to the output terminal of the chroma drive section 8 which is connected to the burst gate 12.

In describing the preferred embodiment of the present invention, only the modified portion constituted as above will be described as to its operations.

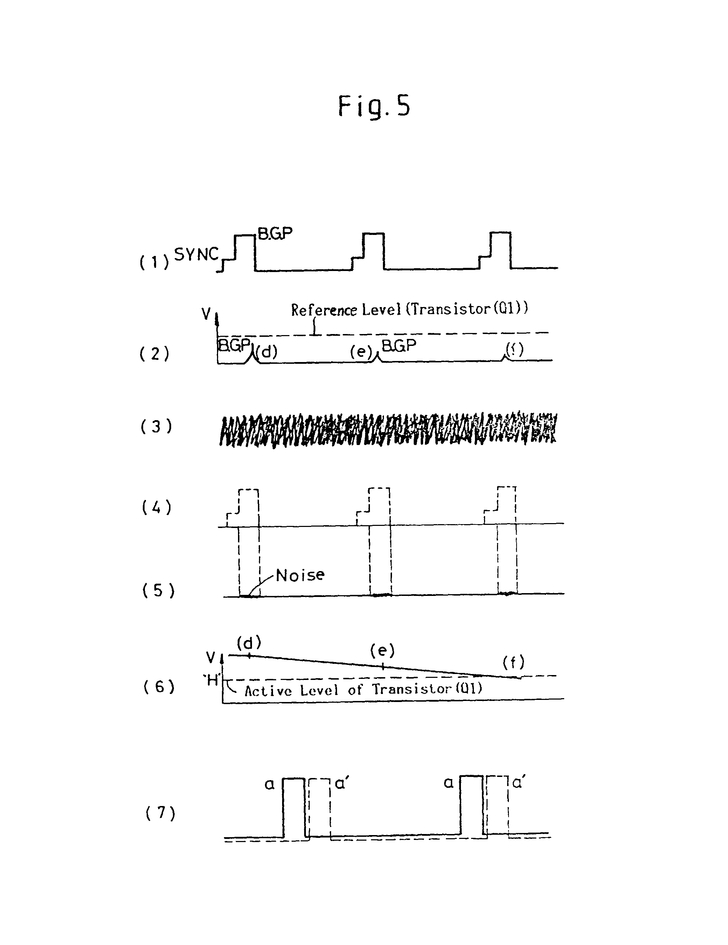

That is, when video signals are input, the wave pattern 1 (SYNC+ B.G.P. signals) of Figure 5 is output from the synchronising isolator 7. In this condition, the synchronising signals (B.G.P.) having the form of the wave pattern 1 of Figure 5 successively pass through the integrating circuit d consisting of resistance R1 and a capacitance C1, the integrating circuit e consisting of a resistance R2 and a capacitance C2, and the integrating circuit f consisting of a resistance R3 and a capacitance C3. Having done so, the signals take the wave pattern 2 of Figure 5, and are supplied to the base of the synchronising (B.G.P.) colour suppressing transistor Q1.

The signals supplied as described above (and taking the form of the wave pattern 2 of Figure 5) will behave in such a manner that the synchronising (B.G.P.) signals and the chroma signals which have passed respectively through the delay section 500 and the chroma drive section 8 will be supplied to the discriminating section 400 in the normal manner, because the supplied signal (wave pattern 2 of Figure 5) corresponds to (lies below) the active reference level of the transistor Q1, and consequently the transistor Q1 is turned off.

During a non-signal picture production (without any line/tuner video signals), a high voltage is output instead of a synchronising (B.G.P.) signal from the synchronising isolator 7 of the Y/C separation section 300 (when there is no signal input, the power source voltage is output because of the inherent nature of the synchronising isolator). This high voltage is supplied to the base of the synchronising (B.G.P.) and colour muting transistor Q1 in the form of the wave pattern 6 of Figure 5, after passing through the integrating circuits d,e,f consisting respectively of resistance R1, capacitance C1, resistance R2, capacitance C2, resistance R3 and capacitance C3.

Consequently, because of the fact that the voltage supplied to the base of the transistor Q1 is higher than the active reference level of the transistor (Q1), the synchronising signals (B.G.P.) are suppressed in the form of the wave pattern 4 of Figure 5, and consequently, the noise component having the form of the wave pattern 3 of Figure 5 and supplied from the chroma drive section 8 during the drum loading at the initial regeneration is not gated.

Therefore, noise components which are extremely weak like the wave pattern 5 of Figure 5 are input to the burst gate 12.

In the case of an IC having no B.G.P. signals, the synchronising signals are delayed up to the colour burst and ID pulse positions, so that erroneous outputs of the discriminating section may be prevented, thereby making it possible to discriminate between PAL, MESECAM and SECAM. (Refer to the dotted synchronisation pulses, a′, of the wave pattern 7 of Figure 5). That is, according to embodiments of the present invention, during non-signal input or blanking periods, the high voltage output from the synchronising isolator is utilized in order to drive the suppression transistor Q1, so that the noise which would otherwise be input into the burst gate 12 is eliminated, thereby stabilising the regenerated picture.

## Claims

1. A picture stabilising circuit for receiving tuner/line video signals and for stabilising a picture signal particularly during non-signal input, comprising:
a tuner synchronising separation section (100) for receiving tuner video signals (b), and for supplying an output signal indicating whether tuner video signals are being received;
a video suppression circuit (200) to be controlled by the output of the tuner synchronising separation section (100) and for preventing tuner/line interferences;
a Y/C separation section (300) for receiving tuner/line video signals and carrying out Y/C separation;
a discriminating section (400) for receiving synchronising signals (B.G.P.) and the chroma signals separated by the Y/C separation section (300), detecting colour burst signals and recognition signals and comparing detected signals with a reference voltage to produce an output; and
a broadcasting method discriminating section (700) for discriminating and selecting the broadcasting method based on the output of the discriminating section (400), wherein the stabilising circuit further comprises:
a further suppression circuit (600) for muting the chroma signals and the synchronising signals (B.G.P.) supplied to the discriminating section (400) during non-signal input.

2. A picture stabilising circuit as claimed in claim 1, in which the further suppression circuit (600) is controlled by the output of a synchronising signal isolator (7) of the Y/C separation section (300), and
the Y/C separation section (300) is adapted to output synchronising signals (B.G.P.) in the presence of a line/tuner video signal input, and to output a high voltage in the absence of such input signals.

3. A picture stabilising circuit as claimed in claim 2, wherein the further suppression circuit (600) comprises:
an integrating circuit (d,e,f) for carrying out integration after receipt of the output of the said synchronising isolator (7) of the Y/C separation section (300), and
a colour suppressing transistor (Q1) controlled by the signal integrated by the integrating circuit (d,e,f) for blocking the synchronisation pulses (B.G.P.) and the colour signals otherwise supplied to the discriminating section (400) during a non-signal or blanking period.

4. The picture regeneration stabilising circuit as claimed in claim 3, in which the integration circuit consists of three integrating and dc-levelling circuits (d,e,f) arranged in series, each integrating and dc-levelling circuit (d,e,f) consisting of a resistor and a capacitor connected between the output of this resistor and earth.

5. A picture regeneration stabilising circuit as claimed in claim 3 or 4, in which the colour suppressing transistor (Q1) has its collector connected via a resistor (R5) to form an output and provide a signal to the discriminating section (400) and its emitter connected to earth.

6. A picture regeneration stabilising circuit according to any preceding claim and further comprising a delay line (500) through which the chroma and synchronising signals (B.G.P.) are supplied from the Y/C separation section to the discriminating section (400).

7. A picture regeneration stabilising circuit according to any preceding claim, in which the discriminating section includes an output amplifier (13, OP1).

## Patentansprüche

1. Bildstabilisierungsschaltung zum Empfang eines Empfänger/Leitungs-Videosignals und zur Stabilisierung eines Bildsignals insbesondere während eines Nicht-Signal-Empfangs, welche umfaßt:
einen Empfänger-Videosignale (b) empfangenden Empfänger-Synchronisations-Trennungs-Abschnitt (100) zur Lieferung eines den Empfang von Empfänger-Videosignalen anzeigenden Ausgangssignals;
eine von dem Ausgang des Empfänger-Synchronisations-Trennungs-Abschnittes (100) gesteuerte Video-Unterdrückungs-Schaltung (200) zur Vermeidung von Empfänger/Leitungs-Interferenzen;
einen Helligkeits/Farbton-Trennungs-Abschnitt (300) zum Empfang von Empfänger/Leitungs-Videosignalen und zur Durchführung der Helligkeits/Farbton-Trennung;
einen Synchronisations-Signale (B.G.P.) und die von dem Helligkeits/Farbton-Trennungs-Abschnitt (300) abgetrennten Chromasignale empfangenden Unterscheidungs-Abschnitt (400) zur Detektion von Farbsynchronssignalen und Erkennungssignalen und zum Vergleich der detektierten Signale mit einer Referenzspannung zum Zwecke der Erzeugung eines Ausgangssignals; und
einen Übertragungssystem-Unterscheidungs-Abschnitt (700) zur Unterscheidung und Auswahl des Übertragungssystems basierend auf dem Ausgangssignal des Unterscheidungs-Abschnittes (400),
**dadurch gekennzeichnet,**
daß die Bildstabilisierungsschaltung weiter umfaßt:
eine weiteren Unterdrückungs-Schaltung (600) zur Dämpfung der Chromasignale und der Synchronisationssignale (B.G.P.) die an dem Unterscheidungs-Abschnitt (400) während eines Nicht-Signal-Empfangs anliegen.

2. Bildstabilisierungsschaltung nach Anspruch 1, dadurch gekennzeichnet, daß die weitere Unterdrückungs-Schaltung (600) von dem Ausgang eines Synchronsationssignal-Trennglieds (7) des Helligkeits/Farbton-Trennungs-Abschnittes (300) gesteuert ist und daß der Helligkeits/Farbton-Trennungs-Abschnitt (300) so ausgebildet ist, daß er beim Anliegen eines Leitungs/Empfänger-Videosignals Synchronisationssignale (B.G.P.) ausgibt und beim fehlenden Anliegen solcher Signale eine hohe Spannung ausgibt.

3. Bildstabilisierungsschaltung nach Anspruch 2, dadurch gekennzeichnet, daß die weitere Unterdrückungs-Schaltung (600) umfaßt:
eine Integrations-Schaltung (d, e, f) zur Durchführung einer Integration nach dem Empfang des Ausgangssignals des Synchronisationssignal-Trennglieds (7) des Helligkeits/Farbton-Trennungs-Abschnittes (300) und
einen vom von der Integrations-Schaltung (d, e, f) integrierten Signal gesteuerten Farb-Unterdrückungs-Transistor (Q1) zur Blockierung der Synchronisationssignale (B.G.P.) und der Chromasignale, welche andernfalls an dem Unterscheidungs-Abschnitt (400) während eines Nicht-Signal-Empfangs oder einer Austast-Periode anliegen.

4. Bildstabilisierungsschaltung nach Anspruch 3, dadurch gekennzeichnet, daß die Integrations-Schaltung aus drei in Reihe geschalteten integrierenden und gleichstromangleichenden Schaltungen (d, e, f) besteht, wobei jede der integrierenden und gleichstromangleichenden Schaltungen (d, e, f) aus einem Widerstand und einem zwischen den Ausgang des Widerstandes und Erde geschalteten Kondensator besteht.

5. Bildstabilisierungsschaltung nach Anspruch 3 oder 4, dadurch gekennzeichnet, daß der Farb-Unterdrückungs-Transistor (Q1) über seinen mit einem Widerstand verbundenen Kollektor einen Ausgang bildet und dem Unterscheidungs-Abschnitt (400) ein Signal zur Verfügung stellt und daß der Emitter des Farb-UnterdrückungsTransistors (Q1) mit Erde verbunden ist.

6. Bildstabilisierungsschaltung nach einem der vorangegangenen Ansprüche, dadurch gekennzeichnet, daß zusätzlich ein Verzögerungs-Abschnitt (500) umfaßt ist, über welchen die Chromasignale und die Synchronisationssignale (B.G.P.) von dem Helligkeits/Farbton-Trennungs-Abschnitt (300) an den Unterscheidungs-Abschnitt (400) lieferbar sind.

7. Bildstabilisierungsschaltung nach einem der vorangegangenen Ansprüche, dadurch gekennzeichnet, daß der Unterscheidungs-Abschnitt einen Ausgangs-Verstärker (13, OP1) umfaßt.

## Revendications

1. Circuit de stabilisation d'image destiné à recevoir des signaux vidéo de syntoniseur/ligne et à stabiliser un signal d'image particulièrement pendant un blocage de signal, comprenant:
une section (100) de séparation de synchronisation de syntoniseur destiné à recevoir des signaux vidéo (b) de syntoniseur et à fournir un signal de sortie indiquant si les signaux vidéo de syntoniseur sont en cours de réception;
un circuit (200) de suppression vidéo devant être commandé par le signal de sortie de la section (100) de séparation de synchronisation de syntoniseur et destiné à empêcher les interférences syntoniseur/ligne
une section (300) de séparation Y/C destinée à recevoir les signaux vidéo de syntoniseur/ligne et à effectuer une séparation Y/C;
une section de discrimination (400) destinée à recevoir des signaux de synchronisation (B. G. P) et les signaux de chroma séparés par la section (300) de séparation Y/C, à détecter les signaux de salve de synchronisation de sous-porteuse et les signaux de reconnaissance et à comparer les signaux détectés avec une tension de référence pour produire un signal de sortie; et
une section (700) de discrimination de procédé de télédiffusion pour discriminer et sélectionner le procédé de télédiffusion en se basant sur le signal de sortie de la section de discrimination (400), le circuit de stabilisation comprenant, en outre:
un circuit supplémentaire (600) de suppression destiné à neutraliser les signaux de chroma et les signaux de synchronisation (B.G.P) fournis à la section de discrimination (400) pendant un blocage de signal.

2. Circuit de stabilisation d'image selon la revendication 1, dans lequel le circuit supplémentaire (600) de suppression est commandé par le signal de sortie d'un dispositif d'isolation de signal de synchronisation (7) de la section (300) de séparation Y/C; et
la section (300) de séparation Y/C est adaptée pour fournir des signaux de synchronisation (B.G.P) en présence d'un signal d'entrée vidéo ligne/syntoniseur, et pour fournir une haute tension en l'absence de ces signaux d'entrée.

3. Circuit de stabilisation d'image selon la revendication 2, dans lequel le circuit de suppression supplémentaire (600) comprend:
un circuit d'intégration (d, e, f) pour exécuter une intégration après réception du signal de sortie dudit dispositif d'isolation de synchronisation (7) de la section (300) de séparation Y/C, et
un transistor (Q1) de suppression de chrominance commandé par le signal intégré par le circuit d'intégration (d, e, f) pour bloquer les impulsions de synchronisation (B.G.P) et les signaux de chrominance fournis par ailleurs à la section de discrimination (400) pendant une période de blocage de signal ou période de suppression.

4. Circuit de stabilisation de regénération d'image selon la revendication 3, dans lequel le circuit d'intégration consiste en trois circuits (d.e.f) d'intégration et d'égalisation de courant continu montés en série, chaque circuit d'intégration et d'égalisation de courant continu (d, e, f) consistant en une résistance et un condensateur monté entre la sortie de cette résistance et la terre.

5. Circuit de stabilisation de régénération d'image selon la revendication 3 ou 4, dans lequel le transistor (Q1) de suppression de chrominance a son collecteur connecté, via une résistance (R5), de manière à former une sortie et à fournir un signal à la section de discrimination (400), et son émetteur connecté à la terre.

6. Circuit de stabilisation de régénération d'image selon l'une quelconque des revendications précédentes et comprenant, en outre, une ligne à retard (500) par l'intermédiaire de laquelle les signaux de chroma et de synchronisation (B.G.P) sont fournis à partir de la section de séparation Y/C à la section de discrimination (400).

7. Circuit de stabilisation de regénération d'image selon l'une quelconque des revendications précédentes, dans lequel la section de discrimination comprend un amplificateur de sortie (18, OP1).
